# EUROPEAN PATENT SPECIFICATION

(11) **EP 2 534 202 B1**
(45) Date of publication and mention of the grant of the patent: **27.04.2022**
(21) Application number: 11702249.1
(22) Date of filing: 08.02.2011
(51) Int. Cl.: C08L 51/04, C08L 55/02, C08K 3/00

(54) **POLYMER COMPOSITION**
POLYMERZUSAMMENSETZUNG
COMPOSITION POLYMÉRIQUE

(30) Priority: 08.02.2010 EP 10152947
(43) Date of publication of application: 19.12.2012
(73) Proprietor: Mitsubishi Chemical Europe GmbH, 40549 Düsseldorf (DE)
(72) Inventor: GIJSMAN, Pieter, NL-6191 NM Beek (NL); SCHRAUWEN, Bernardus Antonius Gerardus, NL-6029 RN Sterksel (NL)
(74) Representative: Renkema, Jaap
(86) International application number: PCT/EP2011/051797
(87) International publication number: WO 2011/095632

(56) References cited:
- EP-A1- 1 274 288
- WO-A2-2009/024496
- US-A- 4 461 865
- US-A1- 2009 292 048
- US-B1- 6 207 344

## Description

The present invention relates to a thermoplastic composition comprising a butadiene containing polymer and a copper containing additive, in particular a copper containing laser direct structuring additive. The invention also relates to a moulded part containing this composition, to a circuit carrier containing such moulded part, to a process for producing such circuit carrier and to the use of an antioxidant in such a composition.

Thermoplastic compositions comprising a polymer and a laser direct structuring (LDS) additive which additive is capable of being activated by laser radiation and thereby forming elemental metal nuclei, are for example described in US-B2-7060421, WO-A-2009024496 and US2009/0292048.

In WO-A-2009/024496, a polymer composition is described and comprises 30-97 wt.% of an aromatic polycarbonate, 0.5-20 wt.% of a LDS additive and 0.5-50 wt.% of a rubber-like polymer such as a polybutadiene. The composition may further comprise 0-25 wt.% of additives such as stabilisers against thermal or thermo-oxidative degradation.

Such polymer compositions can advantageously be used in a LDS process for producing a non-conductive part on which conductive tracks are to be formed by irradiating areas of said part with laser radiation to activate the plastic surface at locations where the conductive path is to be situated and break down the laser direct structuring additive(s) and release metal nuclei, and subsequently metalizing the irradiated areas to accumulate metal on these areas.

Thermoplastic compositions are usually formed in an extruder. The extruder is generally operated at a temperature higher than that necessary to cause the composition to flow. The extrudate is usually quenched and then pelletized into granulates. Such granulates may be used for subsequent molding, shaping or forming and are usually transported and/or stored for a shorter or longer period of time. During such storing and/or transporting, the granulates may absorb water from the environment. The presence of water may lead to surface-streaked parts. In order to release the granulate from absorbed water, thorough drying is usually done just prior to processing the polymer granulates into the desired parts.

Also compositions containing polycarbonate and butadiene containing polymers, such as for example ABS, absorb water from the environment in case the granulates are not packed in moisture-tight packaging. Appropriate drying of such compositions, also when stored for a prolonged period of time, prior to processing results in that the formation of surface streaks caused by the presence of excess moisture can be avoided.

It has now been found that after prolonged storage, for example storing for at least 6 months, of a thermoplastic composition containing butadiene containing polymer as well as copper containing laser direct structuring additive in a packaging that is not moisture tight, drying of the stored composition does not result in the expected reduction of the water content. Furthermore, even after extensive drying, the water content cannot be reduced to a level acceptable for processing. Thus, after a prolonged storage time in a packaging that is not moisture-tight, drying of the stored composition cannot prevent the formation of surface streaks caused by the excess moisture that is still present in the composition to be processed.

The object of the present invention is being able to prolong the storage time of a thermoplastic composition comprising butadiene containing polymer and a copper containing laser direct structuring additive, after which drying of the stored composition allows to reduce the water content to such an extent that formation of surface streaks, that would be caused by the presence of excess moisture in the composition to be processed, can be avoided.

This object is achieved in that the thermoplastic composition, as disclosed in claim 1, further comprises an antioxidant and the weight ratio of antioxidant to polymerised butadiene is at least 0.02:1, and wherein the antioxidant comprises at least a primary antioxidant.

It has now surprisingly been found that the presence of an antioxidant in a thermoplastic composition comprising butadiene containing polymer and a copper containing laser direct structuring additive results in that the storage time in a packaging that is not moisture-tight can be increased, while standard drying of the stored composition allows to reduce the water content to such an extent that formation of surface streaks, that would be caused by the presence of excess moisture in the composition to be processed, can be avoided. Standard drying corresponds with the drying time and the drying conditions needed to reduce the water content in a similar composition comprising butadiene containing polymer but not a copper containing laser direct structuring additive, to such an extent that formation of surface streaks, that would be caused by the presence of excess moisture in the composition to be processed, can be avoided.

Accordingly the present invention relates to a thermoplastic composition according to claim 1, comprising a butadiene containing polymer and a copper containing laser direct structuring additive, wherein the composition further comprises an antioxidant , the weight ratio of antioxidant to polymerised butadiene is at least 0,02:1, and wherein the antioxidant comprises at least one primary antioxidant such as a phenolic antioxidant or an aromatic amine.

The present invention also relates to the use according to claim 15 of an antioxidant in a thermoplastic composition comprising a butadiene containing polymer and a copper containing laser direct structuring additive for increasing the storage time of the composition in a packaging that is not water-tight, while drying of the stored composition still allows to reduce the water content to such an extent that formation of surface streaks, that would be caused by the presence of excess moisture in the composition to be processed, can be avoided, wherein the weight ratio of the antioxidant to the polymerised butadiene is at least 0,02: 1, and wherein the antioxidant comprises at least one primary antioxidant.

US2009/0292048 discloses in the experimental part compositions comprising polycarbonate, ABS (a butadiene containing polymer), copper containing laser direct structuring additive and a customary amount of antioxidant. The amount of ABS is not described. Thus the amount of antioxidant relative to the amount of polymerised butadiene in the composition cannot be derived. US2009/0292048 also does not teach that the use of an antioxidant in a thermoplastic composition comprising a thermoplastic resin, a butadiene containing polymer and a laser direct structuring would result in that the storage time can be increased, while drying of the stored composition still allows to reduce the water content to such an extent that formation of surface streaks, that would be caused by the presence of excess moisture in the composition to be processed, can be avoided.

The weight ratio of antioxidant to polymerised butadiene is preferably at least 0,03 and more preferably at least 0,04 and even more preferably at least 0,045 to further increase the storage time while drying of the stored composition still allows to reduce the water content to such an extent that formation of surface streaks, that would be caused by the presence of excess moisture in the composition to be processed, can be avoided.

The weight ratio of antioxidant to polymerised butadiene is preferably at most 5, more preferably at most 3 and even more preferably at most 1.

As used herein, a butadiene containing polymer is a polymer formed by polymerisation of butadiene monomer and optionally other monomers. As such, a butadiene containing polymer contains polymerised butadiene having structural units according to

I -CH₂-CH=CH-CH₂- or - H₂C-CH-CH=CH₂

These polymers include homopolymers of butadiene, random and block copolymers of butadiene with one or more monomers illustrated by acrylonitrile, styrene, methyl methacrylate. Examples of butadiene containing polymers include butadiene based rubbers like polybutadiene, styrene-butadiene random copolymer and block copolymer, acrylonitrile-butadiene copolymer and butadiene-isoprene copolymer; acrylate based rubbers like acrylate ester-butadiene copolymers.

In a preferred embodiment of the invention, the butadiene containing polymer is one or more graft copolymer of
c.1.) 5 to 90 parts by weight, preferably 20 to 90 parts by weight, based on c), of a mixture of
c.1.1) 50 to 95% by weight styrene, α-methyl styrene, nucleus-substituted styrene, methyl methacrylate or mixtures thereof, and
c.1.2) 50 to 5% by weight (meth)acrylonitrile, methyl methacrylate, n-butyl acrylate, t-butyl (meth)acrylate or mixtures thereof, on
c.2) 95 to 10 parts by weight, preferably 80 to 10 parts by weight, based on the butadiene containing polymer, of a butadiene based rubber. Particularly preferred graft copolymers are ABS resin (acrylonitrile-butadiene-styrene copolymer) and MBS (methyl methacrylate butadiene styrene copolymer) or a mixture of these copolymers, because of the high compatibility between in particular a polycarbonate matrix and such copolymers, thereby enabling that these copolymers can be uniformly dispersed into the polycarbonate matrix. From an economic point of view is acrylonitrile butadiene styrene (ABS) even more preferred. Any commercially available ABS may be applied. Particularly preferred acrylonitrile butadiene styrene (ABS) is acrylonitrile butadiene styrene with a rubber content of 10 to 50 parts by weight, preferably 10 to 40 parts by weight and even more preferably 10 to 30 parts by weight.

The concentration of butadiene containing polymers in the composition of the present invention may range from 1 up to 95 wt.%. The thermoplastic composition preferably further comprises a thermoplastic resin not being a butadiene containing polymer. In case the thermoplastic composition further comprises such a thermoplastic resin, the concentration of butadiene containing polymers in the composition is usually from 1 up to 60 wt.% and typically from 5 up to 50 wt.%. The amount as given is relative to the total thermoplastic composition.

In case the thermoplastic composition further comprises a thermoplastic resin not being a butadiene containing polymer, the concentration of thermoplastic resin in the composition of the present invention may range from 30 up to 97 wt.%, preferably from 30 up to 90 wt. %. The amount as given is relative to the total thermoplastic composition.

Examples of thermoplastic resins that may be present in the composition according to the invention include, but are not limited to polycarbonate, polyamide, polyester, polyesteramide, polystyrene, polymethyl methacrylate or a combination of such resins.

Examples of suitable polyamides (PA) are aliphatic polyamides, that may eventually be branched polyamides, such as PA6, PA46, PA66, PA6/66, PA 11, PA12, semi aromatic polyamides as MXD6, PA6l/6T, PA66/6T, PA4T fully aromatic polyamides and copolymers and blends of the listed polyamides. Examples of suitable polyesters are polyethylene terephtalate (PET), polybutylene terephtalate (PBT), polypropylene terephtalate (PPT), polyethylene naphtanoate (PEN), polybutylene naphtanoate (PBN).Preferred polyesters are polyethylene terephtalate and polybutylene terephtalate.

In a preferred embodiment, the composition comprises aromatic polycarbonate as thermoplastic resin.

Suitable aromatic polycarbonates are polycarbonates made from at least a divalent phenol and a carbonate precursor, for example by means of the commonly known interfacial polymerization process or the melt polymersiation method. Suitable divalent phenols that may be applied are compounds having one or more aromatic rings that contain two hydroxy groups, each of which is directly linked to a carbon atom forming part of an aromatic ring. Examples of such compounds are 4,4'-dihydroxybiphenyl, 2,2-bis(4-hydroxyphenyl)propane (bisphenol A), 2,2-bis(4-hydroxy-3-methylphenyl)propane, 2,2-bis-(3-chloro-4-hydroxyphenyl)-propane, 2,2-bis-(3,5-dimethyl-4-hydroxyphenyl)-propane, 2,4-bis-(4-hydroxyphenyl)-2-methylbutane, 2,4-bis-(3,5-dimethyl-4-hydroxyphenyl)-2-methylbutane, 4,4-bis(4-hydroxyphenyl)heptane, bis-(3,5-dimethyl-4-hydroxyphenyl)-methane, 1,1-bis-(4-hydroxyphenyl)-cyclohexane, 1,1-bis-(3,5-dimethyl-4-hydroxyphenyl)-cyclohexane, 2,2-(3,5,3',5'-tetrachloro-4,4'-dihydroxydiphenyl)propane, 2,2-(3,5,3',5'-tetrabromo-4,4'-dihydroxydiphenyl)propane, (3,3'-dichloro-4,4'-dihydroxyphenyl)methane, bis-(3,5-dimethyl-4-hydroxyphenyl)-sulphon, bis-4-hydroxyphenylsulphon, bis-4-hydroxyphenylsulphide.

The carbonate precursor may be a carbonyl halogenide, a halogen formate or carbonate ester. Examples of carbonyl halogenides are carbonyl chloride and carbonyl bromide. Examples of suitable halogen formates are bis-halogen formates of divalent phenols such as hydroquinone or of glycols such as ethylene glycol. Examples of suitable carbonate esters are diphenyl carbonate, di(chlorophenyl)carbonate, di(bromophenyl)carbonate, di(alkylphenyl)carbonate, phenyltolylcarbonate and the like and mixtures thereof. Although other carbonate precursors may also be used, it is preferred to use the carbonyl halogenides and in particular carbonylchloride, also known as phosgene.

The aromatic polycarbonates in the composition according to the invention may be prepared using a catalyst, an acid acceptor and a compound for controlling the molecular wt..

Examples of catalysts are tertiary amines such as triethylamine, tripropylamine and N,N-dimethylaniline, quaternary ammonium compounds such as tetraethylammoniumbromide and quaternary phosphonium compounds such as methyltriphenylfosfoniumbromide.

Examples of organic acid acceptors are pyridine, triethylamine, dimethylaniline and so forth. Examples of inorganic acid acceptors are hydroxides, carbonates, bicarbonates and phosphates of an alkali metal or earth alkali metal.

Examples of compounds for controlling the molecular wt. are monovalent phenols such as phenol, p-alkylphenols and para-bromophenol and secondary amines.

Such polycarbonates, their preparation and properties are described in detail in for example Encycl. Polym. Sci. Eng., 11, p. 648-718 (Wiley, New York, 1988) and in Kunststoff Handbuch, 3/1, p. 117-297 (Hanser Verlag, Muenchen, 1992).

The composition according to the invention preferably contains a polycarbonate derived from bisphenol A and phosgene and optionally minor amounts of other compounds having one, two or more than two reactive groups as comonomers, for instance for controlling the melt viscosity.

Suitable antioxidants present in the composition according to the invention include primary antioxidants like phenolic antioxidants and aromatic amines. Accordingly, the present invention provides a thermoplastic composition comprising a butadiene containing polymer and a copper containing laser direct structuring additive, wherein the composition further comprises an antioxidant and the weight ratio of antioxidant to polymerised butadiene is at least 0,02:1 and wherein the antioxidant comprises at least a primary antioxidant such as a phenolic antioxidant or an aromatic amine. Examples of these primary antioxidants are: 2,6-di-t-butyl-4-methylphenol; 2,6-di-t-butyl-4-ethyl-phenol; benzenepropanoic acid (e.g. Irganox 1076), 3,5-bis(1,1-dimethylethyl)-4-hydroxy-octadecyl ester; 2,2'-methylenebis (6-t-butyl-4-methylphenol); 2,2'-methylenebis 6-(1-methylcyclohexyl)-p-cresol; 4,4'-butylidenebis (6-t-butyl-3-methyl-phenol); bis-(2-t-butyl-4-methyl-6-(3-t-butyl-5-methyl-2-hydroxy-benzyl)-phenyl)-terephtalate; 1,1,3-Tris (2-methyl-4-hydroxy-5-t-butyl phenyl) butane; 1,3,5-Trimethyl-2,4.6-tris (3,5-di-t-butyl-4-hydroxybenzyl) benzene; butyric acid, 3,3-bis(3-t-butyl-4-hydroxyphenyl) ethylene ester; 1,3,5-tris(3',5'-di-t-butyl-4'-hydroxybenzyl)-s-triazine-2,4,6-(1H,3H,5H)trione; 1,3,5-tris (4-t-butyl-2,6-dimethyl-3-hydroxy-bezyl)-isocyanurate; 3-(3,5-di-t-butyl-4-hydroxy-phenyl) propion acid ester with 1,3,5-tris (2-hydroxy-ethyl)-iso-cyanurate; tetrakis [methylene (3,5-di-t-butyl-4-hydroxyhydrocinnamate)] methane; N,N'-hexamethyiene bis (3,5-di-t-butyl-4-hydroxyhydrocinnamamide; 1,2-bis (3,5-di-t-butyl-4-hydroxyhydrocinnamoyl) hydrazine (e.g. Irganox MD1024); 3,9-bis(1,1-dimethyl-2-((3-(3-t-butyl-4-hydroxy-5-methyl-phenyl)-propyonyl-oxy)-ethyl)-2,4,8,10-tetraoxospiro; 2,2'-ethylidenebis (4.6-di-t-butylphenol); 4,4'-methylenebis (2,6-di-t-butylphenol); tri-ethylene-glycol-bis-3-(t-butyl-4-hydroxy-5-methyl-phenyl)-propionate; 1,6-hexane-diol-bis-3-(3,5-di-t-butyl-4-hydroxyphenyl)-propionate; butylated hydroxyanisole; 2,6-di-t-butyl-4-sec-butyl-phenol, [2-propyleneacid, 2-isopentane-6-[(3-isopentane-2-hydroxy-5-isopentane-phenyl)-ethyl]-4-methyl-phenyl-ester]; [2-propylene-acid,2-t-butyl-6-[(3-t-butyl-2-hydroxy-5-methyl-phenyl)-methyl]-4-methyl-phenyl-ester]; 2,2'-oxamido bis-[ethyl 3-(3,5-di-tert-butyl-4-hydroxyphenyl) propionate; p-cresol/dicyclopentadiene butylated reaction product; di-ethyl-ester of 3,5-di-t-butyl-4-hydroxy-benzyl-phosphoric acid; 2,5,7,8-tetra-methyl-2-(4',8',12'-tri-methyi-tri-decyl)-6-chromanol; N,N'-1,3-propanediylbis(3,5-di-t-butyl-4-hydroxyhydrocinnamamide; calcium bis[monoethyl(3,5-di-t-butyl-4-hydroxybenzyl)phosphonate; 4,4'-di-cumyl-di-phenyl-amine and 2,2,4-trimethyl-1,2-dihydroquinoline polymer.

The antioxidant used in the present invention may consist of the primary antioxidant. Alternatively, the antioxidant may further comprises at least one different type of antioxidant, e.g. secondary antioxidant. The weight ratio of the primary antioxidant to the polymerised butadiene is preferably at least 0,001:1. More preferably, the weight ratio of the primary antioxidant to the polymerised butadiene is at least 0,002, more preferably 0,003, even more preferably 0,005. Even more preferably, the weight ratio of the primary antioxidant to the polymerised butadiene is at least 0,01, 0,02, 0,04 or 0,045.

The weight ratio of the primary antioxidant to polymerised butadiene is preferably at most 5, more preferably at most 3 and even more preferably at most 1.

Another class of suitable antioxidants is the class of the secondary antioxidants like the phosphites and the thioethers. Examples of these secondary antioxidants are: trisnonylphenyl phosphite; tris (2,4-di-t-butylphenyl) phosphite (e.g. Irgafos 168); 2,2-methylene-bis-(4,6-di-tbutyl-phenyl)-octyl-phosphite; 2,2'-ethylidenebis
(4,6-di-t-butylphenyl) fluorophosphonite; bis- (2,4-di-tert-butyl-6-methylphenyl) ethyl phosphite; 2,4,6 tri-t-butyiphenyl-2-butyl-2-ethyl-1,3-propane-diol-phosphite; distearyl pentaerythritol diphosphite; tetrakis-(2,4-di-tert-butyl-phenyl)-4,4'-bi-phenylene-di-phosphonite; bis- (2,4-di-t-butyiphenyl) pentaerythritol diphosphite; bis-(2,6-di-tbutyl-4-methyl-phenyl)-pentaerythritol-di-phosphite; bis-(2,4-dicumylphenyl)-pentaerytritol-diphosphite; 1,3-bis-(diphenylphosphino)-2,2-dimethyl-propane; 2,2',2"-nitrilo triethyl-tris[3,3',5,5'-tetratert-butyl-1,1'-biphenyl-2,2'-diyl]phosphite; dilauryl thiodipropionate; di-myristyl thiodipropionate; distearyl thiodipropionate; distearyl disulfide and pentaerythrityl tetrakis (β-laurylthiopropionate) (e.g. Sandostab 4020).

In one preferred embodiment of the present invention, the antioxidant present in the composition is a primary antioxidant or a mixture of primary antioxidants. In one embodiment of the present invention, the composition comprises at least one primary antioxidant selected from the group consisting of 1,3,5-Trimethyl-2,4,6-tris (3,5-di-t-butyl-4-hydroxybenzyl) benzene; 1,3,5-tris(3',5'-di-t-butyl-4'-hydroxybenzyl)-s-triazine-2,4,6-(1H,3H,5H)trione; 1,3,5-tris (4-t-butyl-2,6-dimethyl-3-hydroxy-bezyl)-isocyanurate; N,N'-hexamethylene bis (3,5-di-t-butyl-4-hydroxyhydrocinnamamide; 1,2-bis (3,5-di-t-butyl-4-hydroxyhydrocinnamoyl) hydrazine; tri-ethylene-glycol-bis-3-(t-butyl-4-hydroxy-5-methyl-phenyl)-propionate; 2,2'-oxamido bis-[ethyl 3-(3,5-di-tert-butyl-4-hydroxyphenyl) propionate; and N,N'-1,3-propanediylbis(3,5-di-t-butyl-4-hydroxyhydrocinnamamide. In another embodiment of the present invention, the antioxidant present in the composition is a secondary antioxidant or a mixture of secondary antioxidants. In another preferred embodiment of the present invention, the antioxidant present in the composition is a mixture of at least one primary antioxidant and at least one secondary antioxidant. Suitable primary and secondary antioxidants are listed above.

The thermoplastic composition contains a copper containing additive, in particular a copper containing laser direct structuring additive that enables the composition to be used in a laser direct structuring (LDS) process. In a LDS process, a laser beam exposes the LDS additive to place it at the surface of the thermoplastic resin composition and to release metal nuclei from the LDS additive. As such, the LDS additive is selected such that, upon exposure to a laser beam, metal atoms are activated and exposed and in areas not exposed by the laser beam, no metal atoms are exposed.

The laser direct structuring additive is capable of being activated by laser radiation and thereby forming elemental metal nuclei within the thermoplastic composition. in the present invention, the laser direct structuring additive is a copper-containing (inorganic or organic) compound which as a consequence of absorption of laser radiation liberates metal in elemental form. It is also possible that the radiation is not directly absorbed by the copper-containing compound, but is absorbed by other substances which then transfer the absorbed energy to the copper-containing compound and thus bring about the liberation of elemental metal. The laser radiation may be UV light (wavelength from 100 to 400 nm), visible light (wavelength from 400 to 800 nm), or infrared light (wavelength from 800 to 25 000 nm). Other preferred forms of radiation are X-rays, gamma rays, and particle beams (electron beams, [alpha]-particle beams, and [beta]-particle beams). The laser radiation is preferably infrared light radiation, more preferably with a wavelength of 1064 nm.

The laser direct structuring additive capable of being activated by laser radiation is preferably comprised of electrically non-conductive high-thermalstability organic or inorganic copper compounds which are preferably insoluble and stable in aqueous acidic or alkaline metalizing baths. Particularly suitable compounds are those which absorb a very large proportion of the light at the wavelength of the incident light. Copper oxides which contain at least two different kinds of cations and have a spine! structure or spinel-related structure, and which remain unchanged in nonirradiated areas of the moulded part that contains the composition of the present invention are particularly suitable. A suitable copper-containing spinel is CuCr₂O₄. Suitable copper-containing spinels are commercially available, an example being PK 3095 from Ferro (DE) or 34E23 or 34E30 from Johnson Matthey (DE). Copper oxides of the formula CuO or Cu₂O are also particularly suitable, and use is preferably made here of nanoparticles, such as NANOARC(R) Copper Oxide from Nanophase Technologies Corporation, Illinois, USA.

Examples of LDS additives useful in the present invention include for example copper containing spinels such as copper chromium oxide spinel and copper molybdenum oxide spinel; copper salts, such as for example copper hydroxide phosphate, copper phosphate and copper sulphate.

The thermoplastic composition according to the invention preferably comprises a copper containing spinel and/or a copper salt as laser direct structuring additive, The thermoplastic composition according to the invention more preferably comprises copper chromium oxide spinel and/or copper molybdenum oxide spinel as laser direct structuring additive.

The concentration of laser direct structuring additive in the composition of the present invention is from 0,5 up to 20 wt.%, preferably from 1 up to 20 wt.%, preferably from 3 up to 10 wt.%, more preferably from 4 up to 10 wt.%, and particularly preferably from 5 up to 10 wt.%. The amount as given is relative to the total composition (being 100 wt.%).

The thermoplastic composition according to the invention may further comprise from 0 up to 25 wt.% of one or more other additives, relative to the total composition. These include the customary additives such as stabilizers against degradation from light, in particular UV light, impact modifiers, processing aids such as release agents and lubricants, colorants such as pigments and dyes, fillers including minerals such as wollastonite or aluminium silicates. Suitable examples of such additives and their customary amounts are stated in the aforementioned Kunststoff Handbuch, 3/1.

The polymer composition may further comprise reinforcing agents, such as glass fibres.

The butadiene containing polymer (component b), laser direct structuring additive (component c) and antioxidant (component d) and optionally the thermoplastic resin (component a) and optionally other additives as described above, and also any other additives and reinforcing agents may be introduced into the thermoplastic resin by means of suitable mixing devices such as single-screw or twin-screw extruders, preferably a twin-screw extruder is used. Preferably, the components b), c) and d) are introduced into the extruder and extruded, then quenched in a water bath and then pelletized. The invention therefore further relates to a process for producing a thermoplastic composition according to the present invention by melt mixing at least components b), c) and d) and optionally component a) and optionally other (particulate) additives and reinforcing agents.

The invention further relates to moulded parts according to claim 11 that contains the thermoplastic composition according to the present invention. The invention relates in particular to a moulded part produced by injection moulding of the composition according to the invention. The invention further relates to a process for producing such a moulded part according to claim 12, wherein the process comprises at least the following steps (1) forming the thermoplastic composition according to the present invention in an extruder to from an extrudate, (2) quenching the extrudate, (3) making granulates of quenched extrudate, (4) storing and/or transporting such granulates whereby water is absorbed into the granulates resulting in water containing granulates, (5) drying such water containing granulates to obtain granulates with a water content acceptable for processing and (6) processing such granulates to obtain the molded parts. Such parts are free of surface streaks that would be caused by the presence of excess moisture in the granulates to be processed. The invention further also relates to an article, in particular a circuit carrier, which contains a moulded part produced from the composition according to the invention, In one embodiment, such a circuit carrier is used for producing an antenna.

The invention further relates to a process according to claim 14 for producing such a circuit carrier which process comprises the steps of providing a moulded part that contains the thermoplastic composition according to the present invention, irradiating areas of said part on which conductive tracks are to be formed with laser radiation to break down the LDS additive b) and releasing metal nuclei, and subsequently metallizing the irradiated areas. In a preferred embodiment, laser is used to simultaneously release metal nuclei and effect ablation of the part while forming an adhesion-promoting surface. This provides a simple means to achieve excellent adhesive strength of the deposited metallic conductor tracks.. The wavelength of the laser is advantageously 248 nm, 308 nm, 355 nm, 532 nm, 1064 nm or of even 10600 nm. The deposition of further metal onto the metal nuclei generated by laser radiation preferably takes place via plating processes. Said metallizing is preferably perfomed by immersing the moulded part in at least one electroless plating bath to form electrically conductive pathways on the irradiated areas of the moulded part. Non-limiting examples of electroless plating processes are a copper plating process, gold plating process, nickel plating process, silver plating, zinc plating and tin plating.

The invention will now be elucidated with reference to the following examples and comparative experiments.

### Example 1 and Comparative Experiments 1-15

The compositions of Comparative Experiments (CEx) 1-21 and of the Examples (Ex 1-7) were prepared from the components as given in Table 1. In addition different butadiene and non-butadiene containing rubber modifiers were added.

All sample compositions were prepared according to the amounts as given in Table 2 to 6. All amounts are in weight percentage. In each of the examples, samples were extruded on a co-rotating twin screw extruder at a temperature of 280°C and the extrudate was granulated.

Water content in the materials was measured according the Karl Fischer method (ISO 15512) at a temperature of 190°C using a Metrohm 737 KF Coulometer.

The collected granulate of the composition in Table 2 (CEx 1) was packed in polyethylene bags and stored in a warehouse at ambient conditions. After a storage period of respectively 2 and 6 months the material was dried in a vacuum oven using standard drying conditions for polycarbonate blends (about 4 hours at about 110°C). Directly after drying, the moisture level of the materials was measured by Karl Fischer method. Since the material that was stored for 6 months still showed a water content that is relatively high, the material was additionally dried for about 20 hours at about 110°C in a vacuum oven and the water content was measured again. Finally the materials were injection molded into Izod bars of 80*10*4 mm using a melt temperature of 260°C. Surface quality was judged by visual checking the presence of streaks and Izod Notched impact strength was measured according to ISO180/1A (results given in Table 2). Surprisingly, even after extensive drying, the moisture level of the material that was stored for 6 months did still not decrease to acceptable levels for processing. As a consequence streaks were visible on the injection molded parts and hydrolysis during processing of the melt caused the impact performance to drastically decrease compared to the material that was only stored for 2 months.

The collected granulate of the compositions in Table 3, 4, 5 and 6 were packed in polyethylene bags and stored in a cabinet under ambient conditions.

Table 3 shows the compositions of the Comparative Experiments CEx 2 to CEx 7. In these experiments the copper chromium oxide spinel is added to polycarbonate and polycarbonate blends with different rubber modifiers. The different materials were stored for about 18 months and subsequently dried for about 6 hours at 120°C in a vacuum oven. Moisture content of the materials was measured directly after drying by Karl Fischer method. Interesting to see is that all materials with a butadiene containing rubber modifier did not dry to acceptable moisture levels for processing (moisture ≤ 0.03%). This experiment shows that the problem (of not being able to sufficiently dry the material after storage) is only applicable to compositions containing a butadiene containing polymer.

Table 4 shows the compositions of Comparative Experiments CEx 8 to CEx 15. In this set of experiments different laser direct structuring additives were added to a composition of polycarbonate and a butadiene containing rubber. CEx 8 is a control sample with no laser direct structuring additive. The materials were stored for about 6 months before they were dried for about 6 hours at 120°C in a vacuum oven. Moisture content was measured directly after drying. For a normal PC-rubber blend material (CEx 8) the applied drying procedure is extensive enough to completely dry the material. However all compositions containing a copper chromium oxide spinel (CEx 9 to CEx 11) did again not properly dry and still contained too much water for processing the material without problems (>0.03%). Interesting to see is that the composition with the copper manganese iron additive (CEx 12) is also not drying properly, whereas the compositions with the zinc chromium iron additive (CEx 13), the cobalt titanium (CEx 14) or titanium antimony nickel (CEx 15) are drying to acceptable low levels. This experiment shows that the problem (of not being able to sufficiently dry the material after storage) is only applicable to compositions containing a copper containing additive.

Table 5 shows the compositions of Example 1 in which antioxidant is added. Comparative Experiments CEx 16 and CEx 17 are control samples with respectively no copper chromium additive and no antioxidant. The granulates of these compositions were kept for 7 days in a climate chamber at 70°C - 62% RH (Relative Humidity) to accelerate ambient storage conditions (typically 20-30°C at 40-60% RH). After the samples were removed from the climate chamber they were dried for about 6 hours at about 100°C in a vacuum oven and the water content was measured directly after drying. The results in Table 5 show that the control sample without the copper chromium additive (CEx 16) had no problems in drying, whereas the control sample with copper chromium additive (CEx 17) did not dry towards an acceptable moisture level below or equal to 0.03%. Apparently the 7 days at increased temperature and relative humidity is a good test to reproduce storage conditions in an accelerated way, since the behavior of CEx 16 & CEx 17 is similar to the behavior found in the tables before. Surprisingly, the sample containing antioxidant (Ex 1) did properly dry after the accelerated storage conditions.

Table 5 further shows the composition of Example 2 in which PET is used and antioxidant is added. Comparative Experiment CEx 18 is a control sample with no antioxidant. The water content was measured in the same way as in the examples indicated above after storing the samples in the same way as in the examples indicated above. The results in Table 5 show that the control sample with copper chromium additive (CEx 18) did not dry towards an acceptable moisture level below or equal to 0.03%. Apparently the 7 days at increased temperature and relative humidity is a good test to reproduce storage conditions in an accelerated way, since the behavior of CEx 18 is similar to the behavior found in the tables before. Surprisingly, the samples containing antioxidant (Ex 2) did properly dry after the accelerated storage conditions.

Table 6 shows the compositions of Examples 3-7 and comparative examples 19-21 in which different antioxidant(s) is added in different amounts. The water content was measured in the same way as in the examples indicated above after storing the samples in the same way as in the examples indicated above. The results of EX 3, Ex 4 and CEx 21 show that too low amount of the antioxidant does not dry towards an acceptable moisture level below or equal to 0.03%. Secondary antioxidants also have a drying function, as can be seen the comparison of CEx 21 and Ex 7, but only in combination with the presence of primary antioxidants, since secondary antioxidant alone does not show the desired drying effect (CEx 19 and XEx 20). Ex 7 shows that a very small amount of primary antioxidant gives desired effects when combined with enough amount of secondary antioxidant.

**Table 1**

| **Material** | **Type or Trade name** | **Supplier** |
|---|---|---|
| Polycarbonate (PC) | LVN (ISO 1628/4) = 55 - 59 ml/g | DSM |
| Poly(ethylene terephthalate) (PET) | Polyclear T86 | Invista |
| Copper chromium oxide spinel 1 | Black 1G | The Shepherd Color Company |
| Copper chromium oxide spinel 2 | Pigment Black PK 3095 | Ferro GmbH |
| Copper chromium oxide | Black 1922 | Broil Buntpigmente |
| spinel 3 | | GmbH & Co. KG |
| Copper manganese iron oxide spinel | Pigment Black PK 3061 | Ferro GmbH |
| Zinc chromium iron oxide spinel | Pigment Brown PK 1092 | Ferro GmbH |
| Tin antimony nickel oxide rutile | Pigment Yellow PK 9416 | Ferro GmbH |
| Cobalt Tin oxide spinel | Pigment Green PK 4030 | Ferro GmbH |
| Mold release | Loxiol P861/3.5 | Cognis |
| Primary Antioxidant 1 | Irganox 1076 (benzenepropanoic acid) | Ciba |
| Primary Antioxidant 2 | Irganox MD 1024 (1,2-bis (3,5-dit-butyl-4-hydroxyhydrocinnamoyl) hydrazine) | Ciba |
| Secondary Antioxidant 1 | Irgafos 168 (tris (2,4-di-t-butylphenyl) phosphite) | Ciba |
| Secondary Antioxidant 2 | Sandostab 4020 (pentaerythrityl tetrakis (β-laurylthiopropionate)) | Clariant |

**Table 2**

| **Sample** | | **CEx 1** | |
|---|---|---|---|
| Components | Units | | |
| PC | % | 56.5 | |
| Butadiene containing rubber(s) | % | 35 | |
| CuCr₂O₄ spinel 1 | % | 8 | |
| Mold release | % | 0.5 | |
| Total amount | % | 100 | |
| Polymerized butadiene content* | % | 9 | |
| | | | |

| Properties | | | |
|---|---|---|---|
| Storage time before molding | months | 2 | 6 |
| Moisture after 4 hrs drying at 110°C | % | 0.01 | 0.14 |
| Moisture after 20 hrs drying at 110°C | % | NA | 0.08 |
| Izod Notched 1A (0°C) | kJ/m² | 54 | 4 |
| Streaks visible | | no | Yes |

| | | | |
|---|---|---|---|
| * Weight percentage relative to total composition | | | |

**Table 3**

| **Sample** | | **CEx 2** | **CEx 3** | **CEx 4** | **CEx 5** | **CEx 6** | **CEx 7** |
|---|---|---|---|---|---|---|---|
| Components | Units | | | | | | |
| PC | % | 91.5 | 56 | 56 | 81.5 | 81.5 | 81.5 |
| Butadiene containing rubber | % | | 35.5 | 35.5 | 10 | | |
| Silicone containing rubber | % | | | | | 10 | |
| Butyl acrylate containing rubber | % | | | | | | 10 |
| CuCr₂O₄ spinel 1 | % | 8 | 8 | 8 | 8 | 8 | 8 |
| Mold release | % | 0,5 | 0.5 | 0.5 | 0.5 | 0.5 | 0.5 |
| Total amount | % | 100 | 100 | 100 | 100 | 100 | 100 |
| Polymerized butadiene content* | % | 0 | 5.8 | 14.5 | 6.5 | 0 | 0 |
| | | | | | | | |
| Properties after about 18 months storaqe | | | | | | | |
| Moisture after 6 hrs drying at 120°C | % | 0.01 | 0.10 | 0.27 | 0.17 | 0.03 | 0.02 |

| | | | | | | | |
|---|---|---|---|---|---|---|---|
| * Weight percentage relative to total composition | | | | | | | |

**Table 4**

| **Sample** | | **CEx 8** | **CEx 9** | **CEx 10** | **CEx 11** | **CEx 12** | **CEx 13** | **CEx 14** | **CEx 15** |
|---|---|---|---|---|---|---|---|---|---|
| Components | Units | | | | | | | | |
| PC | % | 60.8 | 56 | 56 | 56 | 56 | 56 | 56 | 56 |
| Butadiene containing rubber(s) | % | 38.7 | 35.5 | 35.5 | 35.5 | 35.5 | 35.5 | 35.5 | 35.5 |
| CuCr spinel 1 | % | | 8 | | | | | | |
| CuCr spinel 2 | % | | | 8 | | | | | |
| CuCr spinel 3 | % | | | | 8 | | | | |
| FeMnCu spinel | % | | | | | 8 | | | |
| ZnFeCr spinel | % | | | | | | 8 | | |
| Co-Ti spinel | % | | | | | | | 8 | |
| Ti-Sb-Ni rutile | % | | | | | | | | 8 |
| Mold release | % | 0.5 | 0.5 | 0.5 | 0.5 | 0.5 | 0.5 | 0.5 | 0.5 |
| Total amount | % | 100 | 100 | 100 | 100 | 100 | 100 | 100 | 100 |
| Polymerized butadiene content* | % | 9.7 | 9 | 9 | 9 | 9 | 9 | 9 | 9 |
| | | | | | | | | | |
| Properties after about 6 months storage | | | | | | | | | |
| Moisture after 6 hrs drying at 120°C | % | 0.03 | 0.07 | 0.06 | 0.08 | 0.07 | 0.03 | 0.03 | 0.03 |

| | | | | | | | | | |
|---|---|---|---|---|---|---|---|---|---|
| * Weight percentage relative to total composition | | | | | | | | | |

**Table 5**

| **Sample** | | **CEx 16** | **CEx 17** | **Ex 1** | **CEx 18** | **Ex 2** |
|---|---|---|---|---|---|---|
| Components | Units | | | | | |
| PC | % | 60.8 | 56 | 55.9 | | |
| PET | % | | | | 81.5 | 81.3 |
| Butadiene containing rubber(s) | % | 38.7 | 35.5 | 35.4 | 10 | 10 |
| CuCr spinel 1 | % | | 8 | 8 | 8 | 8 |
| Primary Antioxidant 1 | % | | | 0.2 | | 0.2 |
| Mold release | % | 0.5 | 0.5 | 0.5 | 0.5 | 0.5 |
| Total amount | % | 100 | 100 | 100 | 100 | 100 |
| Polymerized butadiene content* | % | 9.7 | 9 | 9 | 6 | 6 |
| Antioxidant/ polymerized butadiene weight ratio | | NA | NA | 0.022 | NA | 0.033 |
| | | | | | | |
| Properties after accelerated conditioning (7 davs at 70°C/62% RH) | | | | | | |
| Moisture after 6 hrs drying at 100°C | % | 0.02 | 0.06 | 0.01 | 0.1 | 0.03 |

| | | | | | | |
|---|---|---|---|---|---|---|
| * Weight percentage relative to total composition | | | | | | |

**Table 6**

| **Sample** | | **Ex 3** | **Ex 4** | **CEx 19** | **CEx 20** | **Ex 5** | **Ex 6** | **CEx 21** | **Ex 7** |
|---|---|---|---|---|---|---|---|---|---|
| Components | Units | | | | | | | | |
| PC | % | 56 | 56 | 56 | 56 | 56 | 56 | 56 | 56 |
| Butadiene containing rubber(s) | % | 35.5 | 35.5 | 35.5 | 35.5 | 35.5 | 35.5 | 35.9 | 35.5 |
| CuCr spinel 1 | % | 8 | 8 | 8 | 8 | 8 | 8 | 8 | 8 |
| Mold release | % | 0.5 | 0.5 | 0.5 | 0.5 | 0.5 | 0.5 | 0.5 | 0.5 |
| Primary Antioxidant 1 | % | 0.45 | | | | 0.2 | | 0.05 | 0.05 |
| Primary Antioxidant 2 | % | | 0.45 | | | | 0.2 | | |
| Secondary Antioxidant 1 | % | | | 0.45 | | | | | |
| Secondary Antioxidant 2 | % | | | | 0.45 | 0.25 | 0.25 | | 0.4 |
| Total amount | % | 100 | 100 | 100 | 100 | 100 | 100 | 100 | 100 |
| Polymerized butadiene content* | % | 9 | 9 | 9 | 9 | 9 | 9 | 9 | 9 |
| Antioxidant/ polymerized butadiene weight ratio | % | 0.05 | 0.05 | 0.05 | 0.05 | 0.05 | 0.05 | 0.006 | 0.05 |
| Primary Antioxidant/ polymerized butadiene weight ratio | % | 0.05 | 0.05 | 0 | 0 | 0.022 | 0.022 | 0.006 | 0.006 |
| Properties after accelerated conditioning (7 days at 70°C/62% RH) | | | | | | | | | |
| Moisture after 6 hrs drying at 120°C | % | 0.02 | 0.02 | 0.06 | 0.21 | 0.02 | 0.03 | 0.05 | 0.03 |

| | | | | | | | | | |
|---|---|---|---|---|---|---|---|---|---|
| * Weight percentage relative to total composition | | | | | | | | | |

## Claims

1. A thermoplastic composition comprising a butadiene containing polymer and a copper containing laser direct structuring additive, wherein the composition further comprises an antioxidant and the weight ratio of antioxidant to polymerised butadiene is at least 0.02:1, preferably at least 0.03:1, more preferably at least 0.04:1 and wherein the antioxidant comprises at least a primary antioxidant such as a phenolic antioxidant or an aromatic amine, wherein the primary antioxidant is selected from the group consisting of 2,6-di-t-butyl-4-methylphenol; 2,6-di-t-butyl-4-ethyl-phenol; benzenepropanoic acid, 3,5-bis(1,1-dimethylethyl)-4-hydroxy-octadecyl ester; 2,2'-methylenebis (6-t-butyl-4-methylphenol); 2,2'-methylenebis 6-(1-methylcyclohexyl)-p-cresol; 4,4'-butylidenebis (6-t-butyl-3-methyl-phenol); bis-(2-t-butyl-4-methyl-6-(3-t-butyl-5-methyl-2-hydroxy-benzyl)-phenyl)-terephtalate; 1,1,3-Tris (2-methyl-4-hydroxy-5-t-butyl phenyl) butane; 1,3,5-Trimethyl-2,4,6-tris (3,5-di-t-butyl-4-hydroxybenzyl) benzene; butyric acid, 3,3-bis(3-t-butyl-4-hydroxyphenyl) ethylene ester; 1,3,5-tris(3',5'-di-t-butyl-4'-hydroxybenzyl)-s-triazine-2,4,6-(1H,3H,5H)trione; 1,3,5-tris (4-t-butyl-2,6-dimethyl-3-hydroxy-bezyl)-isocyanurate; 3-(3,5-di-t-butyl-4-hydroxy-phenyl) propion acid ester with 1,3,5-tris (2-hydroxy-ethyl)-iso-cyanurate; tetrakis [methylene (3,5-di-t-butyl-4-hydroxyhydrocinnamate)] methane; N,N'-hexamethylene bis (3,5-di-t-butyl-4-hydroxyhydrocinnamamide; 1,2-bis (3,5-di-t-butyl-4-hydroxyhydrocinnamoyl) hydrazine; 3,9-bis(1,1-dimethyl-2-(β-(3-t-butyl-4-hydroxy-5-methyl-phenyl)-propyonyl-oxy)-ethyl)-2,4,8,10-tetraoxospiro; 2,2'-ethylidenebis (4,6-di-t-butylphenol); 4,4'-methylenebis (2,6-di-t-butylphenol); tri-ethylene-glycol-bis-3-(t-butyl-4-hydroxy-5-methyl-phenyl)-propionate; 1,6-hexane-diol-bis-3-(3,5-di-t-butyl-4-hydroxyphenyl)-propionate; butylated hydroxyanisole; 2,6-di-t-butyl-4-sec-butyl-phenol, [2-propyleneacid, 2-isopentane-6-[(3-isopentane-2-hydroxy-5-isopentane-phenyl)-ethyl]-4- methyl-phenyl-ester]; [2-propylene-acid,2-t-butyl-6-[(3-t-butyl-2-hydroxy-5-methyl-phenyl)-methyl]-4-methyl-phenyl-ester]; 2,2'-oxamido bis-[ethyl 3-(3,5-di-tert-butyl-4-hydroxyphenyl) propionate; p-cresol/dicyclopentadiene butylated reaction product; di-ethyl-ester of 3,5-di-t-butyl-4-hydroxy-benzyl-phosphoric acid; 2,5,7,8-tetra-methyl-2-(4',8',12'-trimethyl-tri-decyl)-6-chromanol; N,N'-1,3-propanediylbis(3,5-di-t-butyl-4-hydroxyhydrocinnamamide; calcium bis[monoethyl(3,5-di-t-butyl-4-hydroxybenzyl)phosphonate; 4,4'-di-cumyl-di-phenyl-amine and 2,2,4-trimethyl-1,2-dihydroquinoline polymer.

2. Thermoplastic composition according to claim 1, wherein the weight ratio of the primary antioxidant to the polymerised butadiene is at least 0,001:1.

3. Thermoplastic composition according to any one of claims 1-2, wherein the weight ratio of antioxidant to polymerised butadiene is at most 1:1.

4. Thermoplastic composition according to anyone of claims 1-3, wherein the composition comprises poybutadiene, acrylonitrile butadiene styrene rubber (ABS) and/or methylmethacrylate butadiene styrene rubber (MBS) as butadiene containing polymer.

5. Thermoplastic composition according to anyone of claims 1-4, wherein the primary antioxidant is selected from the group consisting of benzenepropanoic acid, 3,5-bis(1,1-dimethylethyl)-4-hydroxy-octadecyl ester; 1,3,5-Trimethyl-2,4,6-tris (3,5-di-t-butyl-4-hydroxybenzyl) benzene; 1,3,5-tris(3',5'-di-t-butyl-4'-hydroxybenzyl)-s-triazine-2,4,6-(1H,3H,5H)trione; 1,3,5-tris (4-t-butyl-2,6-dimethyl-3-hydroxy-bezyl)-iso-cyanurate; N,N'-hexamethylene bis (3,5-di-t-butyl-4-hydroxyhydrocinnamamide; 1,2-bis (3,5-di-t-butyl-4-hydroxyhydrocinnamoyl) hydrazine; tri-ethylene-glycol-bis-3-(t-butyl-4-hydroxy-5-methyl-phenyl)-propionate; 2,2'-oxamido bis-[ethyl 3-(3,5-di-tert-butyl-4-hydroxyphenyl) propionate; and N,N'-1,3-propanediylbis(3,5-di-t-butyl-4-hydroxyhydrocinnamamide.

6. Thermoplastic composition according to anyone of claims 1-5, wherein the antioxidant further comprises at least one secondary antioxidant such as a phosphite or a thioether.

7. Thermoplastic composition according to claim 6, wherein the secondary antioxidant is chosen from trisnonylphenyl phosphite; tris (2,4-di-t-butylphenyl) phosphite; 2,2-methylene-bis-(4,6-di-tbutyl-phenyl)-octyl-phosphite; 2,2'-ethylidenebis (4,6-di-t-butylphenyl) fluorophosphonite; bis- (2,4-di-tert-butyl-6-methylphenyl) ethyl phosphite; 2,4,6 tri-t-butylphenyl-2-butyl-2-ethyl-1,3-propane-diol-phosphite; distearyl pentaerythritol diphosphite; tetrakis-(2,4-di-tert-butyl-phenyl)-4,4'-bi-phenylene-di-phosphonite; bis- (2,4-di-t-butylphenyl) pentaerythritol diphosphite; bis-(2,6-di-tbutyl-4-methyl-phenyl)-pentaerythritol-di-phosphite; bis-(2,4-dicumylphenyl)-pentaerytritol-diphosphite; 1,3-bis-(diphenylphosphino)-2,2-dimethyl-propane; 2,2',2"-nitrilo triethyl-tris[3,3',5,5'-tetratert-butyl-1,1'-biphenyl-2,2'-diyl]phosphite; dilauryl thiodipropionate; di-myristyl thiodipropionate; distearyl thiodipropionate; distearyl disulfide and pentaerythrityl tetrakis (β-laurylthiopropionate).

8. Thermoplastic composition according to anyone of claims 1-7, wherein the composition comprises a copper containing spinel and/or a copper salt as copper containing laser direct structuring additive.

9. Thermoplastic composition according to anyone of claims 1-8, wherein the composition further comprises a thermoplastic resin, wherein the thermoplastic resin is preferably aromatic polycarbonate or polyethylene terephtalate.

10. Thermoplastic composition according to anyone of claims 1-9, wherein the composition comprises
a) from 30 to 97 wt.% of thermoplastic resin,
b) from 0,5 to 20 wt.% of laser-direct structuring additive,
c) from 1 to 60 wt.% of butadiene containing polymer, wherein the amounts of a), b) and c) are relative to the total composition.

11. Moulded part that contains the thermoplastic composition according to any one of claims 1-10.

12. Process for producing a moulded part according to claim 11, wherein the process comprises (1) forming the thermoplastic composition according to anyone of claims 1-10 in an extruder to from an extrudate, (2) quenching the extrudate, (3) making granulates of quenched extrudate, (4) storing and/or transporting such granulates whereby water is absorbed into the granulates resulting in water containing granulates, (5) drying such water containing granulates to obtain granulates with a water content acceptable for processing and (6) processing such granulates to obtain the moulded part..

13. A circuit carrier that contains at least a moulded part according to claim 12.

14. A process for producing a circuit carrier according to claim 13 comprising the steps of providing a moulded part according to claim 11 irradiating areas of said part on which conductive tracks are to be formed with laser radiation to break down the LDS additive b) and releasing metal nuclei, and subsequently metallizing the irradiated areas.

15. Use of an antioxidant in a thermoplastic composition comprising a butadiene containing polymer and a copper containing laser direct structuring additive for increasing the storage time of the composition in a packaging that is not water-tight, while drying of the stored composition still allows to reduce the water content to such an extent that formation of surface streaks, that would be caused by the presence of excess moisture in the composition to be processed, can be avoided,
wherein the weight ratio of the antioxidant to polymerised butadiene is at least 0,02:1,wherein the antioxidant comprises at least one primary antioxidant selected from the group consisting of 2,6-di-t-butyl-4-methylphenol; 2,6-di-t-butyl-4-ethyl-phenol; benzenepropanoic acid, 3,5-bis(1,1-dimethylethyl)-4-hydroxy-octadecyl ester; 2,2'-methylenebis (6-t-butyl-4-methylphenol); 2,2'-methylenebis 6-(1-methylcyclohexyl)-p-cresol; 4,4'-butylidenebis (6-t-butyl-3-methyl-phenol); bis-(2-t-butyl-4-methyl-6-(3-t-butyl-5-methyl-2-hydroxy-benzyl)-phenyl)-terephtalate; 1,1,3-Tris (2-methyl-4-hydroxy-5-t-butyl phenyl) butane; 1,3,5-Trimethyl-2,4,6-tris (3,5-di-t-butyl-4-hydroxybenzyl) benzene; butyric acid, 3,3-bis(3-t-butyl-4-hydroxyphenyl) ethylene ester; 1,3,5-tris(3',5'-di-t-butyl-4'-hydroxybenzyl)-s-triazine-2,4,6-(1H,3H,5H)trione; 1,3,5-tris (4-t-butyl-2,6-dimethyl-3-hydroxy-bezyl)-iso-cyanurate; 3-(3,5-di-t-butyl-4-hydroxy-phenyl) propion acid ester with 1,3,5-tris (2-hydroxy-ethyl)-iso-cyanurate; tetrakis [methylene (3,5-di-t-butyl-4-hydroxyhydrocinnamate)] methane; N,N'-hexamethylene bis (3,5-di-t-butyl-4-hydroxyhydrocinnamamide; 1,2-bis (3,5-di-t-butyl-4-hydroxyhydrocinnamoyl) hydrazine; 3,9-bis(1,1-dimethyl-2-(β-(3-t-butyl-4-hydroxy-5-methyl-phenyl)-propyonyl-oxy)-ethyl)-2,4,8,10-tetraoxospiro; 2,2'-ethylidenebis (4,6-di-t-butylphenol); 4,4'-methylenebis (2,6-di-t-butylphenol); triethylene-glycol-bis-3-(t-butyl-4-hydroxy-5-methyl-phenyl)-propionate; 1,6-hexane-diol-bis-3-(3,5-di-t-butyl-4-hydroxyphenyl)-propionate; butylated hydroxyanisole; 2,6-di-t-butyl-4-sec-butyl-phenol, [2-propyleneacid, 2-isopentane-6-[(3-isopentane-2-hydroxy-5-isopentane-phenyl)-ethyl]-4- methyl-phenyl-ester]; [2-propylene-acid,2-t-butyl-6-[(3-t-butyl-2-hydroxy-5-methyl-phenyl)-methyl]-4-methyl-phenyl-ester]; 2,2'-oxamido bis-[ethyl 3-(3,5-di-tert-butyl-4-hydroxyphenyl) propionate; p-cresol/dicyclopentadiene butylated reaction product; di-ethyl-ester of 3,5-di-t-butyl-4-hydroxy-benzyl-phosphoric acid; 2,5,7,8-tetra-methyl-2-(4',8',12'-tri-methyl-tri-decyl)-6-chromanol; N,N'-1,3-propanediylbis(3,5-di-t-butyl-4-hydroxyhydrocinnamamide; calcium bis[monoethyl(3,5-di-t-butyl-4-hydroxybenzyl)phosphonate; 4,4'-di-cumyl-di-phenyl-amine and 2,2,4-trimethyl-1,2-dihydroquinoline polymer.

## Patentansprüche

1. Thermoplastische Zusammensetzung, umfassend ein Butadien enthaltendes Polymer und ein Kupfer enthaltendes Laser-Direktstrukturierungsadditiv, wobei die Zusammensetzung ferner ein Antioxidans umfasst und das Gewichtsverhältnis von Antioxidans zu polymerisiertem Butadien mindestens 0,02:1, vorzugsweise mindestens 0,03:1, stärker bevorzugt mindestens 0,04:1 beträgt und wobei das Antioxidans mindestens ein primäres Antioxidans wie ein phenolisches Antioxidans oder ein aromatisches Amin umfasst, wobei das primäre Antioxidans ausgewählt ist aus der Gruppe bestehend aus 2,6-Di-t-butyl-4-methylphenol, 2,6-Di-t-butyl-4-ethylphenol; Benzolpropansäure, 3,5-Bis(1,1-dimethylethyl)-4-hydroxyoctadecylester; 2,2'-Methylenbis(6-t-butyl-4-methylphenol); 2,2'-Methylenbis 6-(1-methylcyclohexyl)-p-Kresol; 4,4'-Butylidenbis(6-t-butyl-3-methylphenol); Bis-(2-t-butyl-4-methyl-6-(3-t-butyl-5-methyl-2-hydroxybenzyl)-phenyl)-terephtalat; 1,1,3-Tris(2-methyl-4-hydroxy-5-t-butylphenyl)butan; 1,3,5-Trimethyl-2,4,6-tris(3,5-di-t-butyl-4-hydroxybenzyl)benzol; Buttersäure, 3,3-Bis(3-t-butyl-4-hydroxyphenyl)ethylenester; 1,3,5-Tris(3',5'-di-t-butyl-4'-hydroxybenzyl)-s-triazin-2,4,6-(1H,3H,5H)trion; 1,3,5-Tris (4-t-butyl-2,6-dimethyl-3-hydroxy-benzyl)-isocyanurat; 3-(3,5-Di-t-butyl-4-hydroxyphenyl)-propionsäureester mit 1,3,5-Tris(2-hydroxy-ethyl)-isocyanurat; Tetrakis-[methylen(3,5-di-t-butyl-4-hydroxyhydrocinnamat)]methan; N,N'-Hexamethylenbis(3,5-di-t-butyl-4-hydroxyhydrocinnamamid; 1,2-Bis(3,5-di-t-butyl-4-hydroxyhydrocinnamoyl)hydrazin; 3,9-Bis(1,1-Dimethyl-2-([3-(3-t-butyl-4-hydroxy-5-methylphenyl)-propionyl-oxy)-ethyl)-2,4,8,10-tetraoxospiro; 2,2'-Ethylidenbis(4,6-di-t-butylphenol); 4,4'-Methylenbis(2,6-di-t-butylphenol); Tri-ethylenglykol-bis-3-(t-butyl-4-hydroxy-5-methylphenyl)-propionat; 1,6-Hexandiol-bis-3-(3,5-di-t-butyl-4-hydroxyphenyl)-propionat; butyliertem Hydroxyanisol; 2,6-Di-t-butyl-4-s-butylphenol, [2-Propylensäure, 2-Isopentan-6-[(3-pentan-2-hydroxy-5-pentanphenyl)-ethyl]-4-methylphenylester]; [2-Propylensäure, 2-t-Butyl-6-[(3-t-butyl-2-hydroxy-5-methylphenyl)-methyl]-4-methylphenylester]; 2,2'-Oxamido-bis-[ethyl-3-(3,5-di-tert-butyl-4-hydroxyphenyl)propionat; p-Kresol/Dicyclopentadien-butyliertem Reaktionsprodukt; Diethylester von 3,5-Di-butyl-4-hydroxy-benzyl-phosphorsäure; 2,5,7,8-Tetramethyl-2-(4',8',12'-trimethyl-tri-decyl)-6-chromanol; N,N'-1,3-Propandiylbis(3,5-di-t-butyl-4-hydroxyhydrocinnamamid; Calcium-bis[monoethyl(3,5-di-t-butyl-4-hydroxybenzyl)phosphonat; 4,4'-Dicumyldiphenylamin und 2,2,4-Trimethyl-1,2-dihydrochinolin-Polymer.

2. Thermoplastische Zusammensetzung nach Anspruch 1, wobei das Gewichtsverhältnis des primären Antioxidans zu dem polymerisierten Butadien mindestens 0,001:1 beträgt.

3. Thermoplastische Zusammensetzung nach einem der Ansprüche 1-2, wobei das Gewichtsverhältnis von Antioxidans zu polymerisiertem Butadien höchstens 1:1 beträgt.

4. Thermoplastische Zusammensetzung nach einem der Ansprüche 1-3, wobei die Zusammensetzung Poylbutadien, Acrylnitril-Butadien-Styrol-Kautschuk (ABS) und/oder Methylmethacrylat-Butadien-Styrol-Kautschuk (MBS) als Butadien enthaltendes Polymer umfasst.

5. Thermoplastische Zusammensetzung nach einem der Ansprüche 1-4, wobei das primäre Antioxidans ausgewählt ist aus der Gruppe bestehend aus Benzolpropansäure, 3,5-Bis(1,1-dimethylethyl)-4-hydroxyoctadecylester; 1,3,5-Trimethyl-2,4,6-tris(3,5-di-t-butyl-4-hydroxybenzyl)benzol; 1,3,5-Tris(3',5'-di-t-butyl-4'-hydroxybenzyl)-s-triazin-2,4,6-(1H,3H,5H)trion; 1,3,5-Tris(4-t-butyl-2,6-dimethyl-3-hydroxybezyl)-isocyanurat; N,N'-Hexamethylen-bis(3,5-di-t-butyl-4-hydroxyhydrozimtamid; 1,2-bis(3,5-di-t-Butyl-4-hydroxyhydrocinnamoyl)hydrazin; Triethylenglykol-bis-3-(t-Butyl-4-hydroxy-5-methylphenyl)-propionat; 2,2'-Oxamido-bis-[ethyl-3-(3,5-di-tert-butyl-4-hydroxyphenyl)-propionat; und N,N'-1,3-Propandiylbis(3,5-di-t-butyl-4- hydroxyhydrocinnamamid.

6. Thermoplastische Zusammensetzung nach einem der Ansprüche 1-5, wobei das Antioxidans ferner mindestens ein sekundäres Antioxidans wie ein Phosphit oder einen Thioether umfasst.

7. Thermoplastische Zusammensetzung nach Anspruch 6, wobei das sekundäre Antioxidans ausgewählt ist aus Trisnonylphenylphosphit; Tris-(2,4-di-t-butylphenyl)-phosphit; 2,2-Methylen-bis-(4,6-di-t-butylphenyl)-octylphosphit; 2,2'-Ethylidenbis-(4,6-di-t-butylphenyl)-fluorphosphonit; Bis-(2,4-di-tert-butyl-6-methylphenyl)ethylphosphit; 2,4,6-Tri-t-butylphenyl-2-butyl-2-ethyl-1,3-propan-diol-phosphit; Distearylpentaerythritoldiphosphit; Tetrakis-(2,4-di-tert-butylphenyl)-4,4'-biphenylendiphosphonit; Bis-(2,4-di-t-butylphenyl)pentaerythritoldiphosphit; Bis-(2,6-di-t-butyl-4-methylphenyl)-pentaerythritoldiphosphit; Bis-(2,4-dicumylphenyl)-pentaerytritoldiphosphit; 1,3-Bis-(diphenylphosphino)-2,2-dimethylpropan; 2,2',2"-Nitrilotriethyl-tris[3,3',5,5'-tetratert-butyl-1,1'-biphenyl-2,2'-diyl]phosphit; Dilaurylthiodipropionat; Dimyristylthiodipropionat; Distearylthiodipropionat; Distearyldisulfid und Pentaerythrityltetrakis (p-Laurylthiopropionat).

8. Thermoplastische Zusammensetzung nach einem der Ansprüche 1-7, wobei die Zusammensetzung ein Kupfer enthaltendes Spinell und/oder ein Kupfersalz als Kupfer enthaltendes Laser-Direktstrukturierungsadditiv umfasst.

9. Thermoplastische Zusammensetzung nach einem der Ansprüche 1-8, wobei die Zusammensetzung ferner ein thermoplastisches Harz umfasst, wobei das thermoplastische Harz vorzugsweise aromatisches Polycarbonat oder Polyethylenterephtalat ist.

10. Thermoplastische Zusammensetzung nach einem der Ansprüche 1-9, wobei die Zusammensetzung Folgendes umfasst
a) von 30 bis 97 Gew.-% thermoplastisches Harz,
b) von 0,5 bis 20 Gew.-% Laser-Direktstrukturierungsadditiv,
c) von 1 bis 60 Gew.-% Butadien enthaltendes Polymer, wobei die Mengen a), b) und c) auf die Gesamtzusammensetzung bezogen sind.

11. Formteil, das die thermoplastische Zusammensetzung nach einem der Ansprüche 1-10 enthält.

12. Verfahren zum Herstellen eines Formteils nach Anspruch 11, wobei der Prozess (1) umfasst: Bilden der thermoplastischen Zusammensetzung nach einem der Ansprüche 1-10 in einem Extruder aus einem Extrudat, (2) Abschrecken des Extrudats, (3) Herstellen von Granulat aus abgeschrecktem Extrudat, (4) Lagern und/oder Transportieren eines solchen Granulats, wobei Wasser in das Granulat absorbiert wird, was zu Wasser enthaltendem Granulat führt, (5) Trocknen eines solchen Wasser enthaltenden Granulats, um Granulat mit einem für die Verarbeitung akzeptablen Wassergehalt zu erhalten, und (6) Verarbeiten eines solchen Granulats, um das Formteil zu erhalten.

13. Schaltungsträger, der mindestens ein Formteil nach Anspruch 12 enthält.

14. Verfahren zum Herstellen eines Schaltungsträgers nach Anspruch 13, umfassend die Schritte des Bereitstellens eines Formteils nach Anspruch 11, Bestrahlen von Bereichen des Teils, auf denen Leiterbahnen gebildet werden sollen, mit Laserstrahlung, um das LDS-Additiv b) aufzubrechen, und Freisetzen von Metallkernen und anschließend Metallisieren der bestrahlten Bereiche.

15. Verwendung eines Antioxidans in einer thermoplastischen Zusammensetzung, umfassend ein Butadien enthaltendes Polymer und ein Kupfer enthaltendes Laser-Direktstrukturierungsadditiv zum Erhöhen der Lagerungszeit der Zusammensetzung in einer Verpackung, die nicht wasserdicht ist, während das Trocknen der gespeicherten Zusammensetzung weiterhin ermöglicht, den Wassergehalt so weit zu reduzieren, dass die Bildung von Oberflächenstreifen, die durch das Vorhandensein von überschüssiger Feuchtigkeit in der zu verarbeitenden Zusammensetzung verursacht würden, vermieden werden kann,
wobei das Gewichtsverhältnis des Antioxidans zu polymerisiertem Butadien mindestens 0,02:1 beträgt, wobei das Antioxidans mindestens ein primäres Antioxidans umfasst, das ausgewählt ist aus der Gruppe bestehend aus 2,6-Di-t-butyl-4-methylphenol, 2,6-Di-t-butyl-4-ethylphenol; Benzolpropansäure, 3,5-Bis(1,1-dimethylethyl)-4-hydroxyoctadecylester; 2,2'-Methylenbis(6-t-butyl-4-methylphenol); 2,2-Methylenbis-6-(1-methylcyclohexyl)-p-Kresol; 4,4'-Butylidenbis(6-t-butyl-3-methylphenol); Bis-(2-t-butyl-4-methyl-6-(3-t-butyl-5-methyl-2-hydroxy-benzyl)-phenyl)-terephtalat; 1,1,3-Tris(2-methyl-4-hydroxy-5-t-butylphenyl)butan; 1,3,5-Trimethyl-2,4,6-tris(3,5-di-t-butyl-4-hydroxybenzyl)benzol; Buttersäure, 3,3-Bis(3-t-butyl-4-hydroxyphenyl)ethylenester; 1,3,5-Tris(3',5'-di-t-butyl-4'-hydroxybenzyl)-s-triazin-2,4,6-(1H,3H,5H)trion; 1,3,5-Tris (4-t-butyl-2,6-dimethyl-3-hydroxybenzyl)-isocyanurat; 3-(3,5-Di-t-butyl-4-hydroxyphenyl)-propionsäureester mit 1,3,5-Tris(2-hydroxy-ethyl)-isocyanurat; Tetrakis-[methylen(3,5-di-t-butyl-4-hydroxyhydrocinnamat)]methan; N,N'-Hexamethylenbis(3,5-di-t-butyl-4-hydroxyhydrocinnamamid; 1,2-Bis(3,5-di-t-butyl-4-hydroxyhydrocinnamoyl)hydrazin; 3,9-Bis(1,1-Dimethyl-2-(p-(3-t-butyl-4-hydroxy-5-methylphenyl)-propionyl-oxy)-ethyl)-2,4,8,10-tetraoxospiro; 2,2'-Ethylidenbis(4,6-di-t-butylphenol); 4,4'-Methylenbis(2,6-di-t-butylphenol); Tri-ethylenglykol-bis-3-(t-butyl-4-hydroxy-5-methylphenyl)-propionat; 1,6-Hexandiol-bis-3-(3,5-di-t-butyl-4-hydroxyphenyl)-propionat; butyliertem Hydroxyanisol; 2,6-Di-t-butyl-4-s-butylphenol, [2-Propylensäure, 2-Isopentan-6-[(3-pentan-2-hydroxy-5-pentanphenyl)-ethyl]-4-methylphenylester]; [2-Propylensäure, 2-t-Butyl-6-[(3-t-butyl-2-hydroxy-5-methylphenyl)-methyl]-4-methylphenylester]; 2,2'-Oxamido-bis-[ethyl-3-(3,5-di-tert-butyl-4-hydroxyphenyl)propionat; p-Kresol/Dicyclopentadien-butyliertem Reaktionsprodukt; Diethylester von 3,5-Di-butyl-4-hydroxy-benzyl-phosphorsäure; 2,5,7,8-Tetramethyl-2-(4',8',12'-trimethyl-tri-decyl)-6-chromanol; N,N'-1,3-Propandiylbis(3,5-di-t-butyl-4-hydroxyhydrocinnamamid; Calciumbis[monoethyl(3,5-di-t-butyl-4-hydroxybenzyl)phosphonat; 4,4'-Dicumyldiphenylamin und 2,2,4-Trimethyl-1,2-dihydrochinolin-Polymer.

## Revendications

1. Composition thermoplastique comprenant un polymère contenant du butadiène et un additif de structuration directe par laser contenant du cuivre, dans laquelle la composition comprend en outre un antioxydant et le rapport pondéral de l'antioxydant au butadiène polymérisé est d'au moins 0,02:1, de préférence au moins 0,03:1, plus préférablement au moins 0,04:1 et dans laquelle l'antioxydant comprend au moins un antioxydant primaire tel qu'un antioxydant phénolique ou une amine aromatique, dans laquelle l'antioxydant primaire est choisi dans le groupe constitué de 2,6-di-t-butyl-4-méthylphénol ; 2,6-di-t-butyl-4-éthyl-phénol ; ester3,5-bis(1,1-diméthyléthyl)-4-hydroxy-octadécylique d'acide benzènepropanoïque ; 2,2'-méthylènebis(6-t-butyl-4-méthylphénol) ; 2,2'-méthylènebis 6-(1-méthylcyclohexyl)-p-crésol ; 4,4'-butylidènebis(6-t-butyl-3-méthyl-phénol) ; bis-(2-t-butyl-4-méthyl-6-(3-t-butyl-5-méthyl-2-hydroxy-benzyl)-phényl)-téréphtalate ; 1,1,3-tris(2-méthyl-4-hydroxy-5-t-butyl-phényl)butane ; 1,3,5-triméthyl-2,4,6-tris(3,5-di-t-butyl-4-hydroxybenzyl)benzène ; ester 3,3-bis(3-t-butyl-4-hydroxyphényl)éthylénique d'acide butyrique ; 1,3,5-tris(3',5'-di-t-butyl-4'-hydroxybenzyl)-s-triazine-2,4,6-(1H,3H,5H)trione ; 1,3,5-tris (4-t-butyl-2,6-diméthyl-3-hydroxy-benzyl)-iso-cyanurate ; ester d'acide 3-(3,5-di-t-butyl-4-hydroxy-phényl)propionique avec du 1,3,5-tris (2-hydroxy-éthyl)-iso-cyanurate ; tétrakis [méthylène (3,5-di-t-butyl-4-hydroxyhydrocinnamate)] méthane ; N,N'-hexaméthylène-bis(3,5-di-t-butyl-4-hydroxyhydrocinnamamide ; 1,2-bis (3,5-di-t-butyl-4-hydroxyhydrocinnamoyl)hydrazine ; 3,9-bis(1,1-diméthyl-2-([3-(3-t-butyl-4-hydroxy-5-méthyl-phényl)-propyonyl-oxy)-éthyl)-2,4,8,10-tétraoxospiro ; 2,2'-éthylidènebis(4,6-di-t-butylphénol) ; 4,4'-méthylènebis(2,6-di-t-butylphénol) ; tri-éthylène-glycol-bis-3-(t-butyl-4-hydroxy-5-méthyl-phényl)-propionate ; 1,6-hexane-diol-bis-3-(3,5-di-t-butyl-4-hydroxyphényl)-propionate ; hydroxyanisole butylée ; 2,6-di-t-butyl-4-sec-butyl-phénol, [2-acide propylénique, 2-isopentane-6-[(3-isopentane-2-hydroxy-5-isopentane-phényl)-éthyl]-4-méthyl-phényl-ester] ; [2-acide propylénique,2-t-butyl-6- [(3-t-butyl-2-hydroxy-5-méthyl-phényl)-méthyl]-4-méthyl-phényl-ester] ; propionate de 2,2'-oxamido bis-[éthyl 3-(3,5-di-tert-butyl-4-hydroxyphényl) ; produit de réaction butylé de p-crésol/dicyclopentadiène ; ester diéthylique d'acide 3,5-di-t-butyl-4-hydroxy-benzyl-phosphorique ; 2,5,7,8-tétra-méthyl-2-(4',8', 12'-tri-méthyl-tri-décyl)-6-chromanol ; N,N'-1,3-propanediylbis(3,5-di-t-butyl-4-hydroxyhydrocinnamamide ; bis[monoéthyl(3,5-di-t-butyl-4-hydroxybenzyl)phosphonate de calcium ; 4,4'-di-cumyl-di-phényl-amine et polymère de 2,2,4-triméthyl-1,2-dihydroquinoline.

2. Composition thermoplastique selon la revendication 1, dans laquelle le rapport pondéral de l'antioxydant primaire au butadiène polymérisé est d'au moins 0,001:1.

3. Composition thermoplastique selon l'une quelconque des revendications 1 à 2, dans laquelle le rapport pondéral de l'antioxydant au butadiène polymérisé est d'au plus 1:1.

4. Composition thermoplastique selon l'une quelconque des revendications 1 à 3, dans laquelle la composition comprend du polybutadiène, du caoutchouc acrylonitrile butadiène styrène (ABS) et/ou du caoutchouc méthylméthacrylate butadiène styrène (MBS) en tant que polymère contenant du butadiène.

5. Composition thermoplastique selon l'une quelconque des revendications 1 à 4, dans laquelle l'antioxydant primaire est choisi dans le groupe constitué d'ester 3,5-bis(1,1-diméthyléthyl)-4-hydroxy-octadécylique d'acide benzenepropanoïque ; 1,3,5-triméthyl- 2,4,6-tris (3,5-di-t-butyl-4-hydroxybenzyl)benzène ; 1,3,5-tris(3',5'-di-t-butyl-4'-hydroxybenzyl)-s-triazine-2,4,6-(1H,3H,5H)trione ; 1,3,5-tris (4-t-butyl-2,6-diméthyl-3-hydroxy-bézyl)-iso-cyanurate ; N,N'-hexaméthylène-bis(3,5-di-t-butyl-4-hydroxyhydrocinnamamide ; 1,2-bis (3,5-di-t-butyl-4-hydroxyhydrocinnamoyl)hydrazine ; tri-éthylène-glycol-bis-3-(t-butyl-4-hydroxy-5-méthyl-phényl)-propionate ; 2,2'-oxamido-bis-[éthyl 3-(3,5-di-tert-butyl-4-hydroxyphényl)propionate ; et N,N'-1,3-propanediylbis(3,5-di-t-butyl-4-hydroxyhydrocinnamam ide.

6. Composition thermoplastique selon l'une quelconque des revendications 1 à 5, dans laquelle l'antioxydant comprend en outre au moins un antioxydant secondaire tel qu'un phosphite ou un thioéther.

7. Composition thermoplastique selon la revendication 6, dans laquelle l'antioxydant secondaire est choisi parmi phosphite de trisnonylphényle ; phosphite de tris(2,4-di-t-butylphényle) ; 2,2-méthylène-bis-(4,6-di-tbutyl-phényl)-octyl-phosphite ; 2,2'-éthylidène-bis(4,6-di-t-butylphényl)fluorophosphonite ; phosphite de bis-(2,4-di-tert-butyl-6-méthylphényl)éthyle ; 2,4,6-tri-t-butylphényl-2-butyl-2-éthyl-1,3-propane-diol-phosphite ; diphosphite de distéaryl-pentaérythritol ; tétrakis-(2,4-di-tert-butyl-phényl)-4,4'-bi-phénylene-di-phosphonite ; diphosphite de bis-(2,4-di-t-butylphényl)pentaérythritol ; diphosphite de bis-(2,6-di-t-butyl-4-méthyl-phényl)-pentaérythritol ; bis-(2,4-dicumylphényl)-pentaérythritol-diphosphite ; 1,3-bis-(diphénylphosphino)-2,2-diméthyl-propane ; 2,2',2"-nitrilo triéthyl-tris[3,3',5,5'-tétratert-butyl-1,1'-biphényl-2,2'-diyl]phosphite ; thiodipropionate de dilauryle ; thiodipropionate de di-myristyle ; thiodipropionate de distéaryle ; disulfure de distéaryle et tétrakis(p-laurylthiopropionate) de pentaérythrityle.

8. Composition thermoplastique selon l'une quelconque des revendications 1 à 7, dans laquelle la composition comprend un spinelle contenant du cuivre et/ou un sel de cuivre en tant qu'additif de structuration directe par laser contenant du cuivre.

9. Composition thermoplastique selon l'une quelconque des revendications 1 à 8, dans laquelle la composition comprend en outre une résine thermoplastique, dans laquelle la résine thermoplastique est de préférence un polycarbonate aromatique ou du polyéthylène téréphtalate.

10. Composition thermoplastique selon l'une quelconque des revendications 1 à 9, dans laquelle la composition comprend
a) de 30 à 97 % en poids de résine thermoplastique,
b) de 0,5 à 20 % en poids d'additif de structuration directe par laser,
c) de 1 à 60 % en poids de polymère contenant du butadiène, dans laquelle les quantités de a), b) et c) sont par rapport à la composition totale.

11. Pièce moulée qui contient la composition thermoplastique selon l'une quelconque des revendications 1 à 10.

12. Procédé de production d'une pièce moulée selon la revendication 11, dans lequel le procédé comprend (1) le formage de la composition thermoplastique selon l'une quelconque des revendications 1 à 10 dans une extrudeuse pour former un extrudat, (2) la trempe de l'extrudat, (3) la fabrication de granulés d'extrudat trempé, (4) le stockage et/ou le transport de tels granulés moyennant quoi de l'eau est absorbée dans les granulés ce qui résulte en des granulés contenant de l'eau, (5) le séchage de tels granulés contenant de l'eau pour obtenir des granulés avec une teneur en eau acceptable pour traitement et (6) le traitement de tels granulés pour obtenir la pièce moulée.

13. Support de circuit qui contient au moins une pièce moulée selon la revendication 12.

14. Procédé de production d'un support de circuit selon la revendication 13 comprenant les étapes consistant à fournir une pièce moulée selon la revendication 11 à irradier des zones de ladite pièce sur lesquelles des pistes conductrices doivent être formées avec un rayonnement laser pour désintégrer l'additif LDS (de structuration directe par laser) b) et libérer des noyaux de métal, et métalliser ensuite les zones irradiées.

15. Utilisation d'un antioxydant dans une composition thermoplastique comprenant un polymère contenant du butadiène et un additif de structuration directe par laser contenant du cuivre pour augmenter le temps de stockage de la composition dans un emballage qui n'est pas étanche à l'eau, alors qu'un séchage de la composition stockée permet toujours de réduire la teneur en eau dans une mesure telle que la formation de traînées de surface, qui seraient provoquées par la présence d'humidité en excès dans la composition à traiter, peut être évitée,
dans laquelle le rapport pondéral de l'antioxydant au butadiène polymérisé est d'au moins 0,02:1, dans laquelle l'antioxydant comprend au moins un antioxydant primaire choisi dans le groupe constitué de 2,6-di-t-butyl-4-méthylphénol ; 2,6-di-t-butyl-4-éthyl-phénol ; ester3,5-bis(1,1-diméthyléthyl)-4-hydroxy-octadécylique d'acide benzènepropanoïque ; 2,2'-méthylènebis(6-t-butyl-4-méthylphénol) ; 2,2'-méthylènebis-6-(1-méthylcyclohexyl)-p-crésol ; 4,4'-butylidènebis (6-t-butyl-3-méthyl-phénol) ; bis-(2-t-butyl-4-méthyl-6-(3-t-butyl-5- méthyl-2-hydroxy-benzyl)-phényl)-téréphtalate ; 1,1,3-tris(2-méthyl-4-hydroxy-5-t-butyl-phényl)butane ; 1,3,5-triméthyl-2,4,6-tris(3,5-di-t-butyl-4-hydroxybenzyl)benzène ; ester 3,3-bis(3-t-butyl-4-hydroxyphényl)éthylénique d'acide butyrique ; 1,3,5-tris(3',5'-di-t-butyl-4'-hydroxybenzyl)-s-triazine-2,4,6-(1H,3H,5H)trione ; 1,3,5-tris (4-t-butyl-2,6-diméthyl-3-hydroxy-benzyl)-iso-cyanurate ; ester d'acide 3-(3,5-di-t-butyl-4-hydroxy-phényl)propionique avec du 1,3,5-tris (2-hydroxy-éthyl)-iso-cyanurate ; tétrakis [méthylène (3,5-di-t-butyl-4- hydroxyhydrocinnamate)] méthane ; N,N'-hexaméthylène-bis(3,5-di-t-butyl-4-hydroxyhydrocinnamamide ; 1,2-bis (3,5-di-t-butyl-4-hydroxyhydrocinnamoyl)hydrazine ; 3,9-bis(1,1-diméthyl-2-([3-(3-t-butyl-4-hydroxy-5-méthyl-phényl)-propyonyl-oxy)-éthyl)-2,4,8,10-tétraoxospiro ; 2,2'-éthylidènebis(4,6-di-t-butylphénol) ; 4,4'-méthylènebis(2,6-di-t-butylphénol) ; tri-éthylène-glycol-bis-3-(t-butyl-4-hydroxy-5-méthyl-phényl)-propionate ; 1,6-hexane-diol-bis-3-(3,5-di-t-butyl-4-hydroxyphényl)-propionate ; hydroxyanisole butylée ; 2,6-di-t-butyl-4-sec-butyl-phénol, [2-acide propylénique, 2-isopentane-6-[(3-isopentane-2-hydroxy-5-isopentane-phényl)-éthyl]-4-méthyl-phényl-ester] ; [2-acide propylénique,2-t-butyl-6- [(-t-butyl-2-hydroxy-5-méthyl-phényl)-méthyl]-4-méthyl-phényl-ester] ; propionate de 2,2'-oxamido bis-[éthyl 3-(3,5-di-tert-butyl-4-hydroxyphényl) ; produit de réaction butylé de p-crésol/dicyclopentadiène ; ester diéthylique d'acide 3,5-di-t-butyl-4-hydroxy-benzyl-phosphorique ; 2,5,7,8-tétra-méthyl-2-(4',8',12'-tri-méthyl-tri-décyl)-6-chromanol ; N,N'-1,3-propanediylbis(3,5-di-t-butyl-4-hydroxyhydrocinnamamide ; bis[monoéthyl(3,5-di-t-butyl-4-hydroxybenzyl)phosphonate de calcium ; 4,4'-di-cumyl-di-phényl-amine et polymère de 2,2,4-triméthyl-1,2-dihydroquinoline.
